# EUROPEAN PATENT SPECIFICATION

(11) **EP 0 760 562 B1**
(45) Date of publication and mention of the grant of the patent: **27.10.2004**
(21) Application number: 96306320.1
(22) Date of filing: 30.08.1996
(51) Int. Cl.: H04J 3/06, H04N 7/56, H04N 7/66

(54) **Communication procedure control system**
Kontrollsystem für Kommunikationsprozedur
Système de contrôle pour une procédure de communication

(30) Priority: 30.08.1995 JP 22210895
(43) Date of publication of application: 05.03.1997
(73) Proprietor: SHARP KABUSHIKI KAISHA, Osaka-shi, Osaka-fu 545-0013 (JP); NIPPON TELEGRAPH AND TELEPHONE CORPORATION, Shinjuku-ku, Tokyo 163-19 (JP)
(72) Inventor: Shioi, Masahiro, Chiba-shi, Chiba (JP); Hibi, Keiichi, Matsudo-shi, Chiba (JP); Nakabayashi, Jiro, Urawa-shi, Saitama (JP); Iwano, Tsuneaki, Suginami-ku, Tokyo (JP); Nakamura, Osamu, Han-no-shi, Saitama (JP); Kanada, Youji, Nerima-ku, Tokyo (JP); Kura, Tsuneko, Sagamihara-shi, Kanagawa (JP); Oshima, Takashi, Nerima-ku, Tokyo (JP)
(74) Representative: Brown, Kenneth Richard

(56) References cited:
- EP-A- 0 535 890
- US-A- 5 537 150
- ITU-T: "Recommendation H.242" March 1993 , INTERNATIONAL TELECOMMUNICATION UNION XP002098662 * paragraph 7.1 *

## Description

### BACKGROUND OF THE INVENTION

With developments of high-speed digital communications networks such as ISDN (Integrated Services Digital Networks) and advances of video processing techniques, there has been an increasing demand for video communication services. The concept of interactive Multimedia becomes popular and various kinds of information services besides audio and video communications are expected to emerge and develop.

An example of a multimedia communication apparatus capable of multiplexing multimedia information is disclosed in EP-A-0 535 890.

A method for multiplexing audio information, video information and data in a transmission line is defined by ITU-T Recommendation H.221. Information to be multiplexed according to the H.221 has various forms: audio, image, LSD (Low-Speed Data), HSD (High-Speed Data), MLP (Multilayer Protocol), HMLP (High-Speed Multilayer Protocol) and ECS (Encryption Control Signal).

LSD and HSD may have free contents for applications, e.g., data for external device control, character data, highly fine color still image and facsimile.

In a frame structure according to the H.221, one 64-kbps channel B is constructed of octets to be transmitted at 8 kHz. A data unit is a frame of 80 octets, a sub-multiframe consisting of 2 frames, and a multiframe consisting of 8 sub-multiframes. A receiver establishes synchronization of every data unit by detecting a frame alignment (synchronizing) word (FAW) and a multiframe alignment (synchronizing) word (MFAW). Recognition of establishment or getting-out of synchronization is made with front two-step alignment guard and back two-step alignment guard operations.

There is an example of bit arrangement of multiplexed different kinds of signals according to H. 221. In the example, information consisting of audio 48 kbps, video 68.8 kbps and LSD 8 kbps is multiplexed to be transmitted over 2B channels. A communication party (receiving terminal) is informed by BAS (Bitrate Allocation Signal) codes of how the information was multiplexed. A receiving terminal after establishment of frame alignment (synchronization) and multiframe alignment separates multiplexed information referring to the received BAS codes. The BAS code is transmitted one for each sub-multiframe.

The separated information, e,g., image data is handled as follows:

ITU-T Recommendation H.261 defines an image coding method. The channel coding enables the detection and correction of transmission error at communicating terminals. Forward Error Correction (FEC) is conducted by using BCH (Bose Chaudhuri Hocquenghem) code of "511, 493". This channel coding is to add an error-correcting code of 18 bits to a file identifier (Fi) of 1 bit and coded image data of 492 bits. The receiving terminal first detects synchronizing bit pattern of a FEC frame and then decodes coded image data correcting error by using error correcting parity bit.

At the beginning of communication, a sending party and a receiving party negotiate with each other to determine how to multiplex and transmit the above-mentioned different kinds of information, i.e., transmission mode not to exceed the receiving capability of parties. This negotiation is defined as a communication procedure using BAS codes according to the ITU-T Recommendation H.242.

In case if an error in BAS bit position occurs, received information is incorrectly separated. In view of this problem, the Recommendation (H.242) provides that BAS code itself consists of double error-correcting code (16, 8). Namely, it uses such protection that the received BAS code is considered to be invalid if an error of not less than 3 bits occurred in a frame synchronization word in the same sub-multiframe, and three of the BAS codes received just before the frame synchronization was lost is also considered to be invalid. The double error-correcting code (16, 8) has 8 error correcting bits added to 8 bits of BAS code. The above-mentioned protection, however, is ineffective if an uncorrectable transmission-line error occurred only in BAS data strings. In consequence of the transmission error in BAS code, incorrect separation of the received information occurs.

There is a conventional communication procedure control system that includes a video synchronization monitoring portion for monitoring the video FEC synchronization in a video data decoding, a data synchronization monitoring portion for monitoring synchronization of synchronous data and a H. 221 frame-synchronization monitoring portion for monitoring the synchronization of the H. 221 frame. These monitoring portions detect loss of the FEC synchronization in a video data decoding portion and loss of the data synchronization in a data receiving portion when the received information was incorrectly separated

The above-mentioned error conditions, by way of example of erroneous recognition BAS code, where a sequence LSD8k of BAS codes in a sub-multiframe SMFn+7 transmitted from a sending terminal is incorrectly recognized as MLP6.4k in the received sequence of BAS codes.

On the other hand, in the case if any of the synchronization monitors detected that the video FEC synchronization or the data synchronization is lost with keeping the H.221 frame synchronization as established and the synchronization could not recovered within a specified time, a transmission procedure executing portion recognizes that the receiving mode of the receiving terminal does not match with the transmitting mode of the sending terminal and then executes the mode-mismatch recovering procedure. This procedure repeats the negotiation of a communication mode at the beginning of the communication between them as shown in the latter stage of the mode-mismatch recovery procedure, whereat the communication will be once conducted only in an initial mode of audio µ-law OF for call-setting-up. The transmission mode is then determined by the negotiation and the receiving party is informed of the multiplexing conditions and multiplexed information to establish again the initially intended communication mode.

It is assumed that three kinds of information, e.g., in terms of audio (48 kbps), data LSD (8 kbps) and video (68.8 kbps) are now transmitted at a transfer rate of 2×64 kbps. The transmission rate of the video is variable and determined at 68.8 kbps by subtracting audio rate, LSD rate, MLP rate and FAS (Frame Alignment Signal), BAS rate from the transfer rate. In the event of a transmission error having occurred in a sub-multiframe SMFn+7, an error took place in the transmitted BAS codes but an incorrect BAS code of MLP 6.4 kbps was recognized as a received command of BAS code. In this instance, MLP 6.4 kbps is multiplied to the transmission state and a resultant transmission state is recognized with a result of incorrect separation of the three kinds of information. Namely, a part of video data is recognized as MLP (M1, M2, ...) and, therefore, the video (FEC) synchronization is lost and will not be restored. On the other hand, the data (LSD) can be correctly separated keeping the data synchronization because the transmission condition of both is the same. However, the conventional mode-mismatch recovering procedure is executed again starting with only speech communication, causing interruption of data transmission.

### SUMMARY OF THE INVENTION

The present invention relates to a communication procedure control system that can exactly execute error recovery procedure whenever out-of-synchronization condition occurs in any portion during multiplex transmission of data.

The present invention has, as its object the provision of a communication procedure control system which, in the event that any of different kinds of multiplexed data after separation is pulled out of synchronization (provided the H.221 frame alignment is maintained), can recover the normal synchronous transmission condition from the mismatched mode condition without interrupting transmission of information in the established synchronization.

To solve the above-mentioned problem according to the conventional method, the present invention according to claim 1 provides a communication procedure control system for multiplex transmission of a plurality of different forms of data in frames according to the ITU-T Recommendation H.221, comprising data synchronization monitoring means for monitoring the different forms of received data, separated after having been received in the form of a frame H.221 over a multiplex transmission line, frame synchronization monitoring means for monitoring frame synchronization of the received frames, communication procedure executing means for executing a mode-mismatch recovering procedure for matching transmission and reception communication modes in the event that loss of synchronization of data transmission occurs and continues over a specified time, characterized in that information synchronization control means is provided for performing overall control of the synchronized conditions of the received data and for issuing, in the event of loss of synchronization in said monitored information over the specified time, a request for execution by said communication procedure execution means of a mode-mismatch recovering procedure while maintaining transmission of the information which has not lost synchronization.

Such a system can execute mode-mismatch recovering procedure without interrupting transmission of information for which synchronization remains established.

Preferred further features are defined in claims 2 to 7.

### BRIEF DESCRIPTION OF THE DRAWINGS

Figures 1A and 1B are illustrative of a frame structure according to the recommendation H.221 of ITU-T.
Figure 2 shows an example of bit arrangement for multiplexing signals by using frames H.221.
Figure 3 is illustrative of a method for communication line coding system according to the recommendation H.261 of ITU-T.
Figure 4 shows an exemplified state in which an error is added to BAS code.
Figure 5 is a block diagram of a control portion of a conventional transmission control system.
Figure 6 shows an example of recognition of a BAS code with the error attached thereto.
Figure 7 (7A, 7B and 7C) shows an example of a sequence of BAS codes to be transmitted and received when executing a mode initializing procedure and a mode mismatch recovering procedure according to a conventional transmission control system.
Figure 8 is another example of bit arrangement for multiplexing signals by using frames H.221.
Figure 9 is a block diagram of a control portion of a communication procedure control system embodying the present invention.
Figure 10 (10A, 10B and 10C) shows an example of a sequence of BAS codes to be transmitted and received when executing a mode initializing procedure and a mode mismatch recovering procedure according to the present invention.
Figure 11 (11A, 11B and 11C) shows an example of a sequence of BAS codes to be transmitted and received when executing a mode initializing procedure and a mode mismatch recovering procedure according to a communication procedure control system according to the present invention.

### PREFERRED EMBODIMENT OF THE INVENTION

A method for multiplexing audio information, video information and data in a transmission line is defined by ITU-T Recommendation H.221. Information to be multiplexed according to the H.221 has various forms: audio, image, LSD (Low-Speed Data), HSD (High-Speed Data), MLP (Multilayer Protocol), HMLP (High-Speed Multilayer Protocol) and ECS (Encryption Control Signal).

LSD and HSD may have free contents for applications, e.g., data for external device control, character data, highly fine color still image and facsimile.

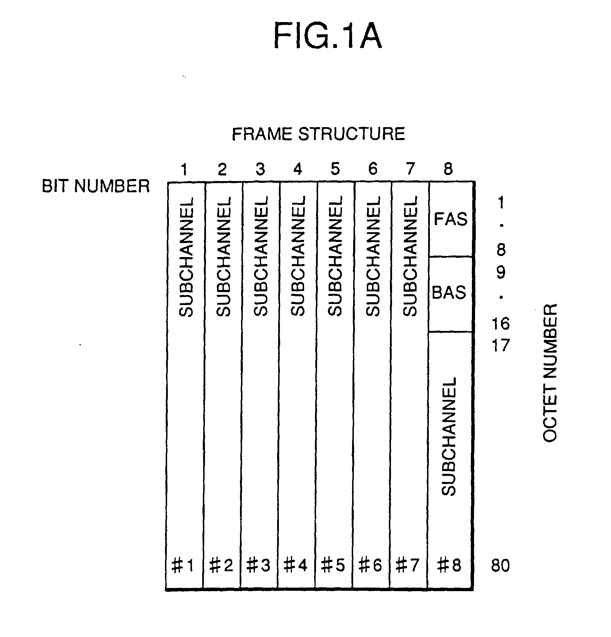

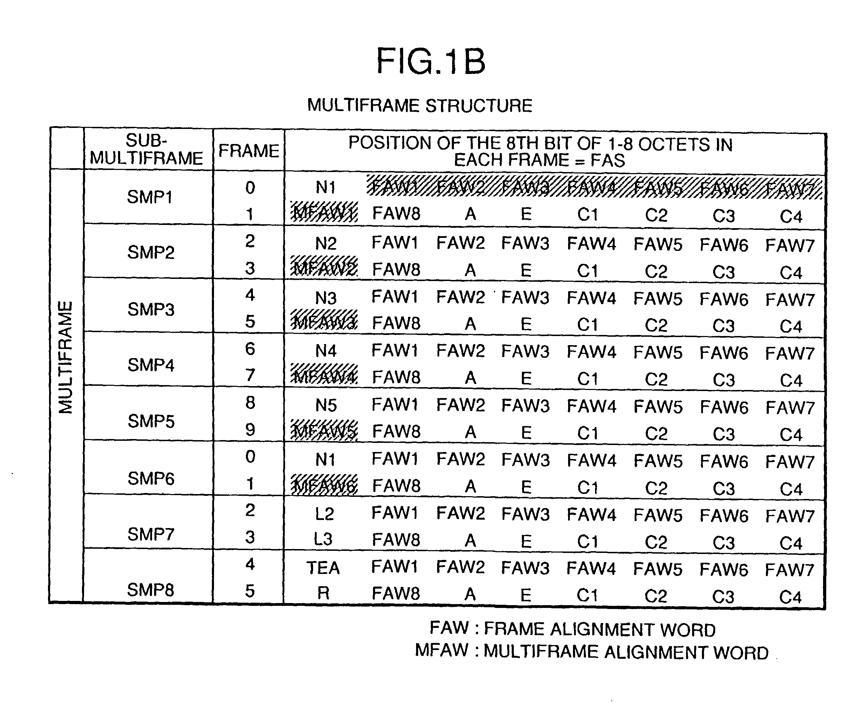

Fig. 1A and Fig. 1B illustrate a frame structure according to the H.221. One 64-kbps channel B is constructed of octets to be transmitted at 8 kHz. A data unit is a frame of 80 octets (see Fig. 1A), sub-multiframe consisting of 2 or 8 unit frames, and a multiframe consisting of 8 sub-multiframes (see Fig. 1B). As shown in Figs. 1A and 1B, a receiver establishes synchronization of every data unit by detecting a frame alignment (synchronizing) word (FAW) and a multiframe alignment (synchronizing) word (MFAW). Recognition of establishment or getting-out of synchronization is made with front two-step alignment guard and back two-step alignment guard operations.

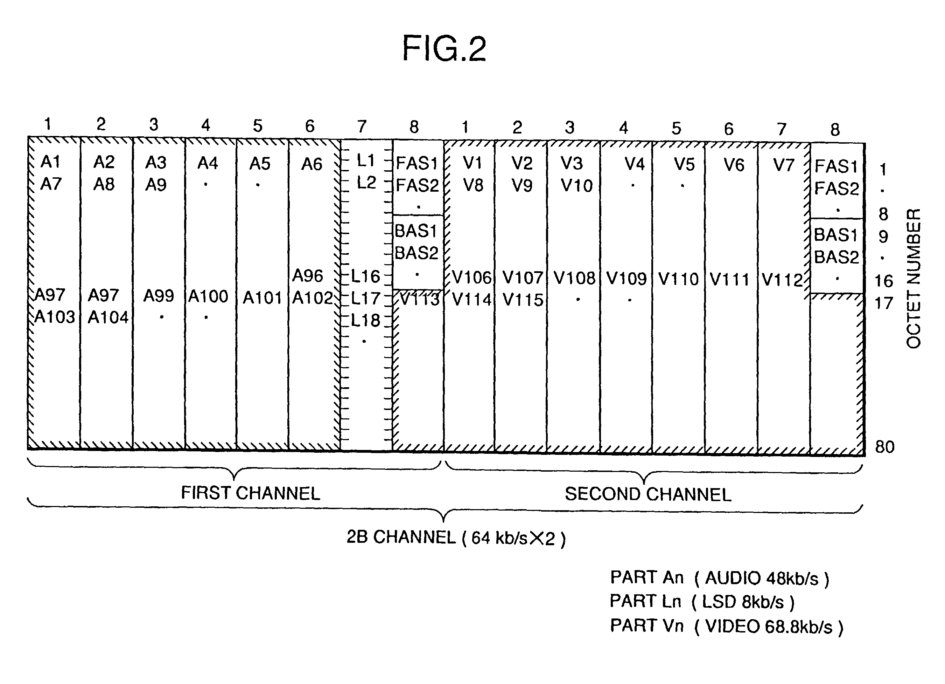

Fig. 2 shows an example of bit arrangement of multiplexed different kinds of signals according to H. 221. Information consisting of audio 48 kbps, video 68.8 kbps and LSD 8 kbps is multiplexed to be transmitted over 2B channels. A communication party (receiving terminal) is informed by BAS codes (see Fig. 2) of how the information was multiplexed. A receiving terminal after establishment of frame alignment (synchronization) and multiframe alignment separates multiplexed information referring to the received BAS codes. The BAS code is transmitted one for each sub-multiframe.

The separated information, e.g., image data is handled as follows:

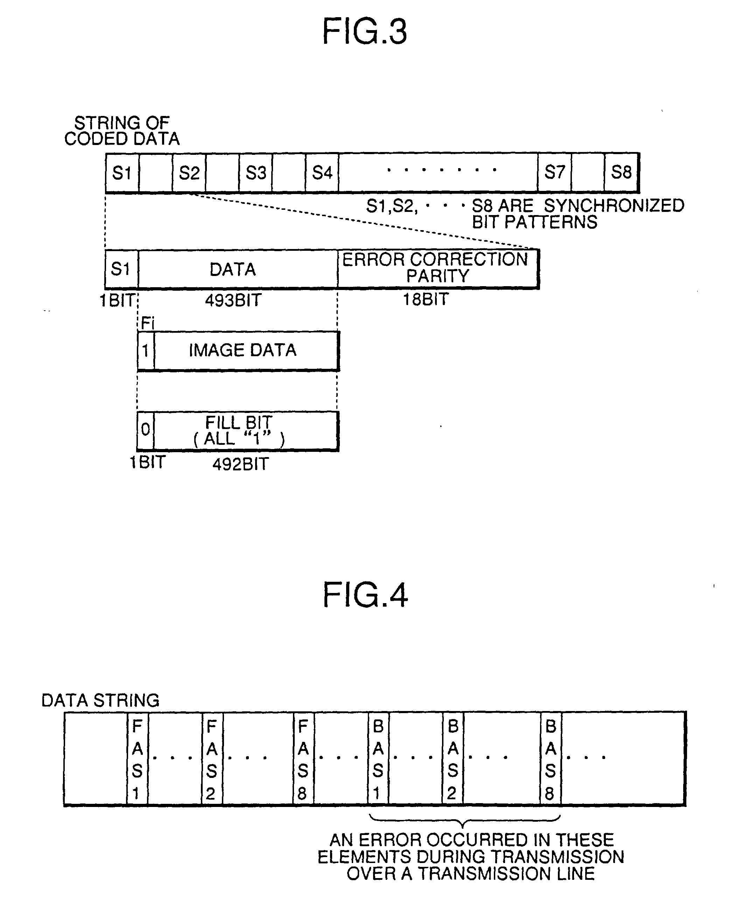

Fig. 3 is a view for explaining a channel coding method according to the ITU-T Recommendation standard H.261. This recommended standard H.261 defines an image coding method. The channel coding enables the detection and correction of transmission error at communicating terminals. Forward Error Correction (FEC) is conducted by using BCH (Bose Chaudhuri Hocquenghem) code of "511, 493". This channel coding is to add an error-correcting code of 18 bits to a file identifier (Fi) of 1 bit and coded image data of 492 bits. The receiving terminal first detects synchronizing bit pattern S1 to S8 of a FEC frame and then decodes coded image data correcting error by using error correcting parity bit.

At the beginning of communication, a sending party and a receiving party negotiate with each other to determine how to multiplex and transmit the above-mentioned different kinds of information, i.e., transmission mode not to exceed the receiving capability of parties. This negotiation is defined as a communication procedure using BAS codes according to the ITU-T Recommendation standard H.242.

In case if an error in BAS bit position occurs, received information is incorrectly separated. In view of this problem, the Recommendation standard (H.242) provides that BAS code itself consists of double error-correcting code (16, 8). Namely, it uses such protection that the received BAS code is considered to be invalid if an error of not less than 3 bits occurred in a frame synchronization word in the same sub-multiframe, and three of the BAS codes received just before the frame synchronization was lost is also considered to be invalid. The double error-correcting code (16, 8) has 8 error correcting bits added to 8 bits of BAS code. The above-mentioned protection, however, is ineffective if an uncorrectable transmission-line error occurred only in BAS data strings as shown in Fig. 4. In consequence of the transmission error in BAS code, incorrect separation of the received information occurs.

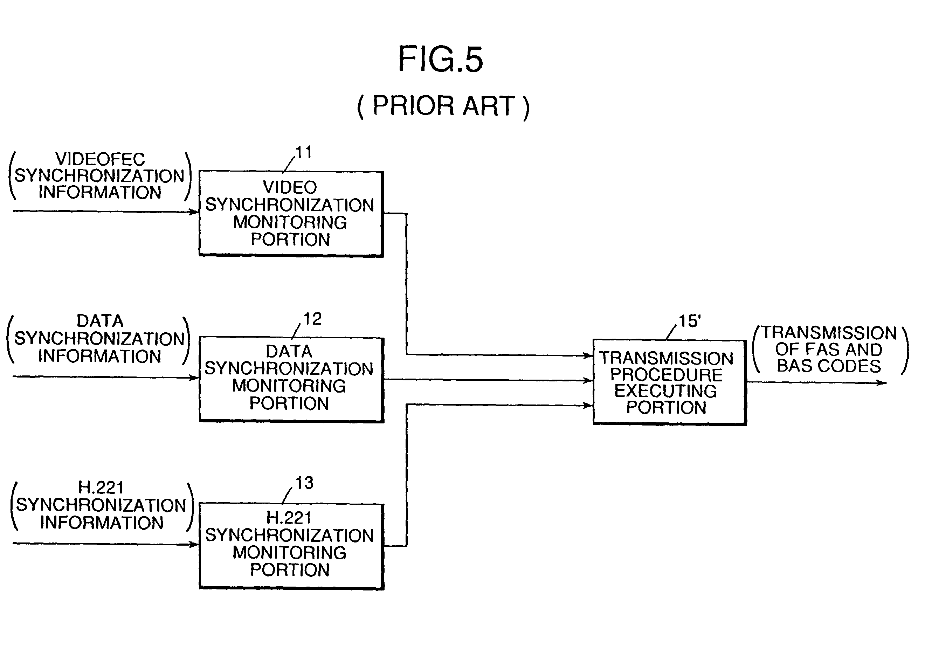

Fig. 5 is a block diagram of a conventional communication procedure control system that includes a video synchronization monitoring portion 11 for monitoring the video FEC synchronization in a video data decoding, a data synchronization monitoring portion 12 for monitoring synchronization of synchronous data and a H. 221 frame-synchronization monitoring portion 13 for monitoring the synchronization of the H. 221 frame. These monitoring portions detect loss of the FEC synchronization in a video data decoding portion and loss of the data synchronization in a data receiving portion when the received information was incorrectly separated.

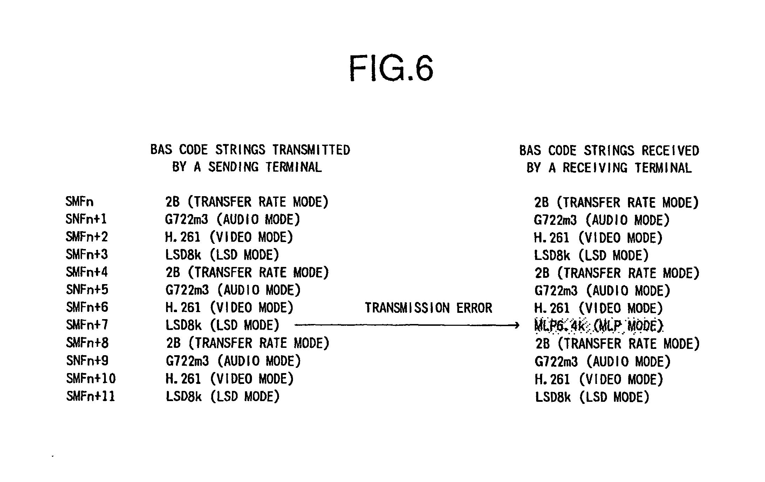

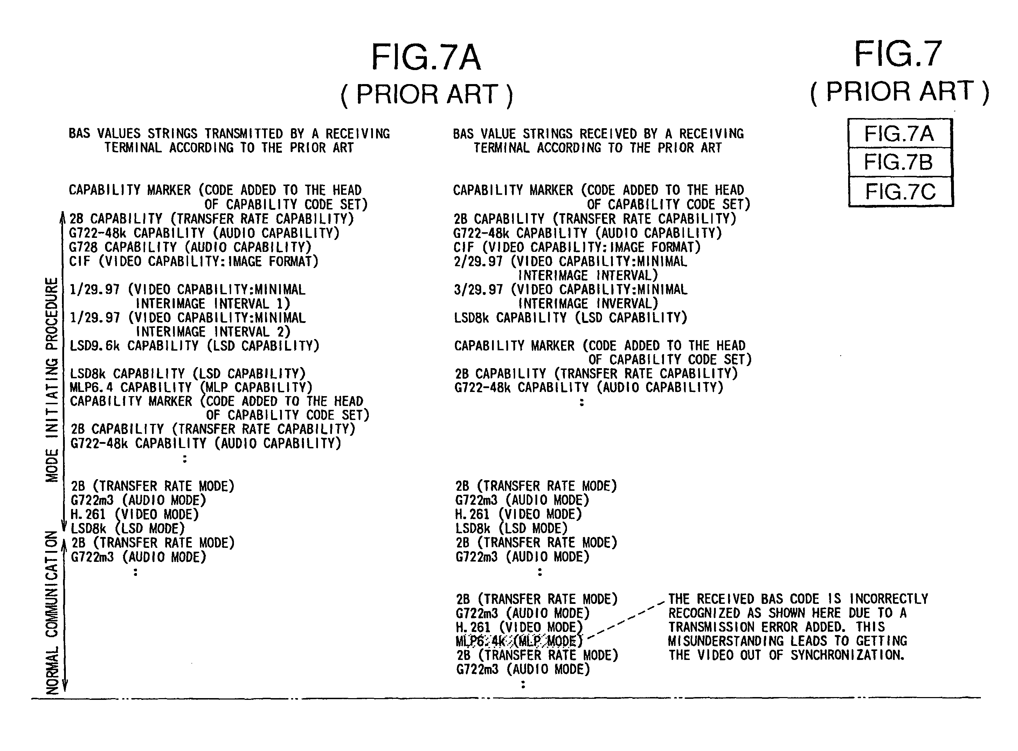

The above-mentioned error conditions, by way of example, are shown in Figs. 6 and 7A. Fig. 6 shows an example of erroneous recognition BAS code, where a sequence LSD8k of BAS codes in a sub-multiframe SMFn+7 transmitted from a sending terminal is incorrectly recognized as MLP6.4k in the received sequence of BAS codes.

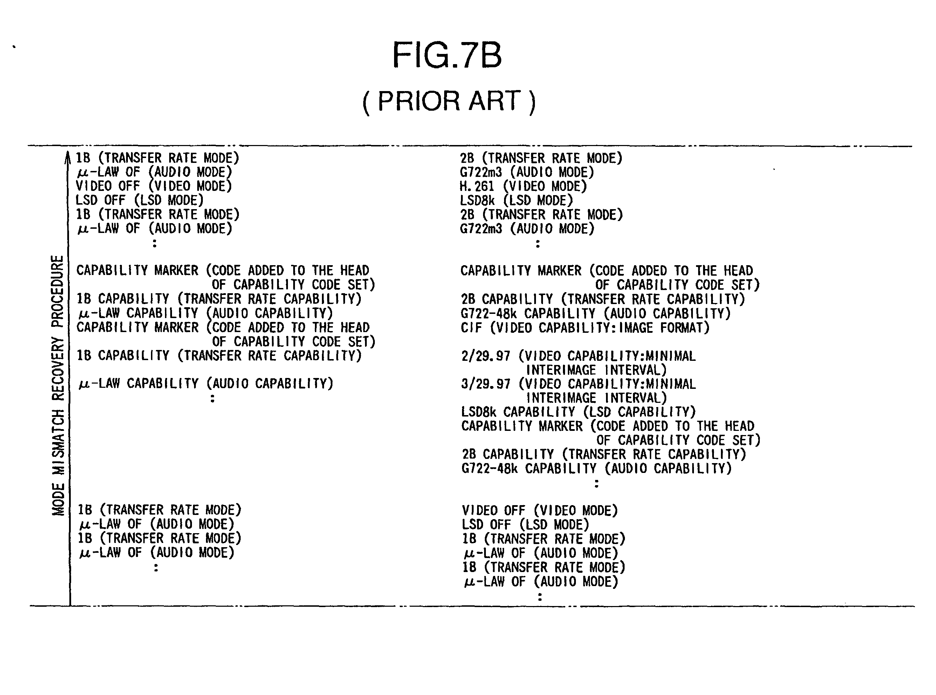

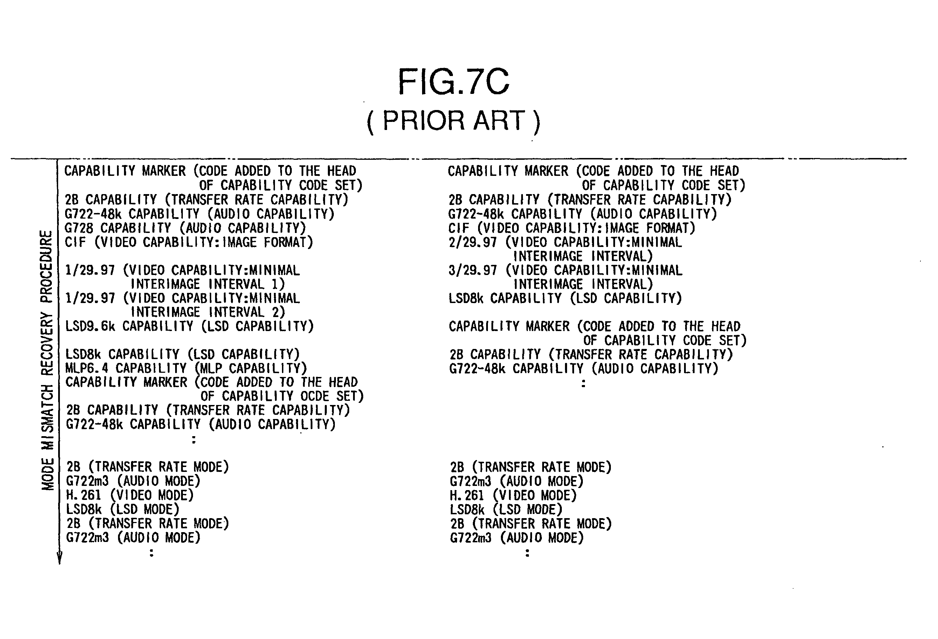

Figs. 7B and 7C shows an example of a sequence of BAS codes to be transmitted and received when a mode mismatch recovering procedure: the above-mentioned erroneous recognition occurred in a mode-initializing procedure (as shown in Fig. 7A) resulting in loosing video synchronization.

On the other hand, in the case if any of the synchronization monitors 11, 12 detected that the video FEC synchronization or the data synchronization is lost with keeping the H.221 frame synchronization as established and the synchronization could not recovered within a specified time, a transmission procedure executing portion 15' recognizes that the receiving mode of the receiving terminal does not match with the transmitting mode of the sending terminal and then executes the mode-mismatch recovering procedure. This procedure repeats the negotiation of a communication mode at the beginning of the communication between them as shown in the latter stage of the mode-mismatch recovery procedure (shown in Figs. 7B and 7C), whereat the communication will be once conducted only in an initial mode of audio µ-law OF for call-setting-up. The transmission mode is then determined by the negotiation and the receiving party is informed of the multiplexing conditions and multiplexed information to establish again the initially intended communication mode.

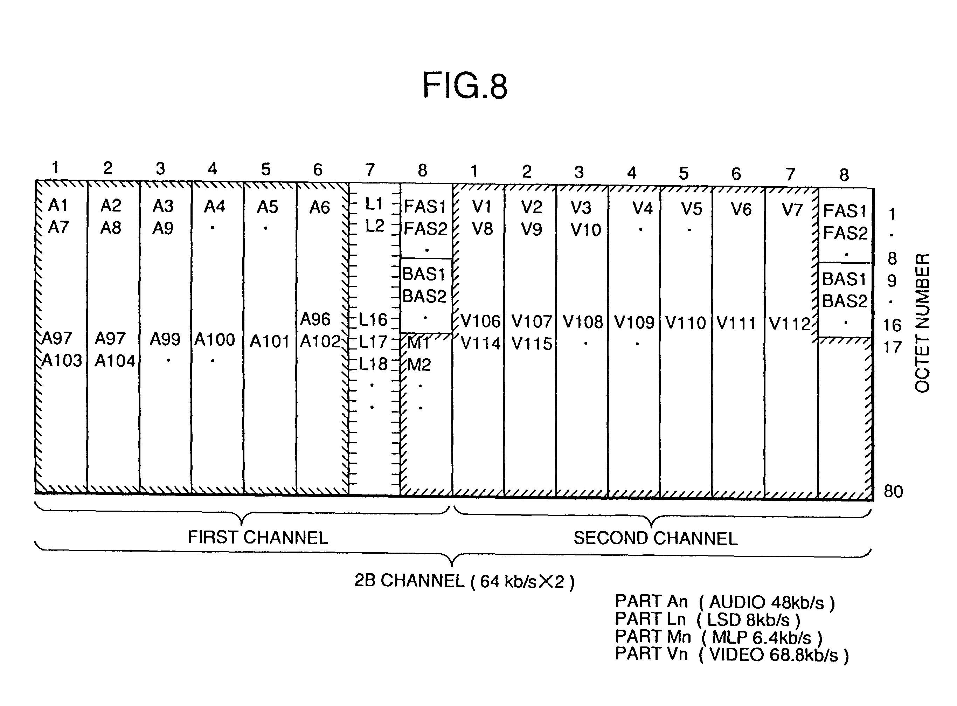

It is assumed that three kinds of information, e.g., in terms of audio (48 kbps), data LSD (8 kbps) and video (68.8 kbps) are now transmitted at a transfer rate of 2×64 kbps. The transmission rate of the video is variable and determined at 68.8 kbps by subtracting audio rate, LSD rate, MLP rate and FAS, BAS rate from the transfer rate. In the event of a transmission error having occurred in a sub-multiframe SMFn+7 as shown in Fig. 6, an error took place in the transmitted BAS codes but an incorrect BAS code of MLP 6.4 kbps was recognized as a received command of BAS code. In this instance, MLP 6.4 kbps is multiplied to the transmission state of Fig. 2 and a resultant transmission state of Fig. 8 is recognized with a result of incorrect separation of the three kinds of information. Namely, a part of video data is recognized as MLP (M1, M2, ...) and, therefore, the video (FEC) synchronization is lost and will not be restored. On the other hand, the data (LSD) can be correctly separated keeping the data synchronization because the transmission condition of Fig. 2 is the same as that of the transmission conditions of Fig. 8. However, the conventional mode-mismatch recovering procedure is executed again starting with only speech communication, causing interruption of data transmission.

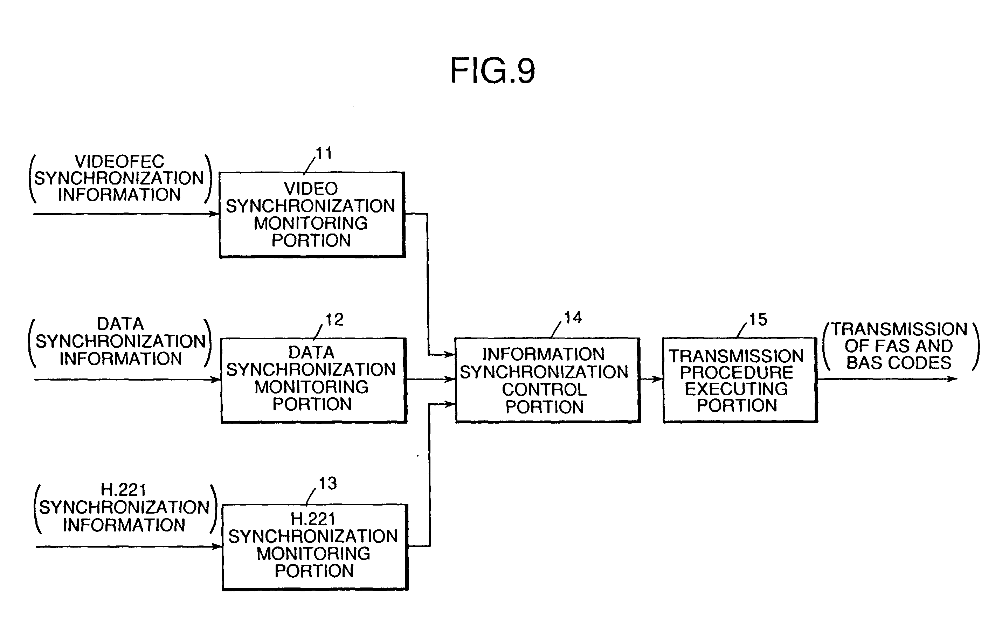

Fig. 9 is a block diagram of a control portion of a communication procedure control system embodying the present invention.

In Fig. 9, a video-synchronization monitoring portion 11 monitors FEC synchronization of video data in a video-data decoding portion, a data synchronization monitoring portion 12 monitors synchronization of synchronous data in a data receiving portion and a H.221 synchronization monitoring portion 13 monitors frame synchronization of each H.221 frame. A synchronization control portion 14 is connected to the video-synchronization monitoring portion 11, the data synchronization monitoring portion 12 and the H.221 synchronization monitoring portion 13. It performs overall control of the synchronized conditions of every kind of information and issues a request for executing mode-mismatch recovering procedure in the case that synchronization of any kind of information was lost and could not be restored after the elapse of a specified time. A transmission procedure executing portion 15 is connected to the synchronization control portion 14 and executes the synchronization restoring procedure and the mode-mismatch recovering procedure.

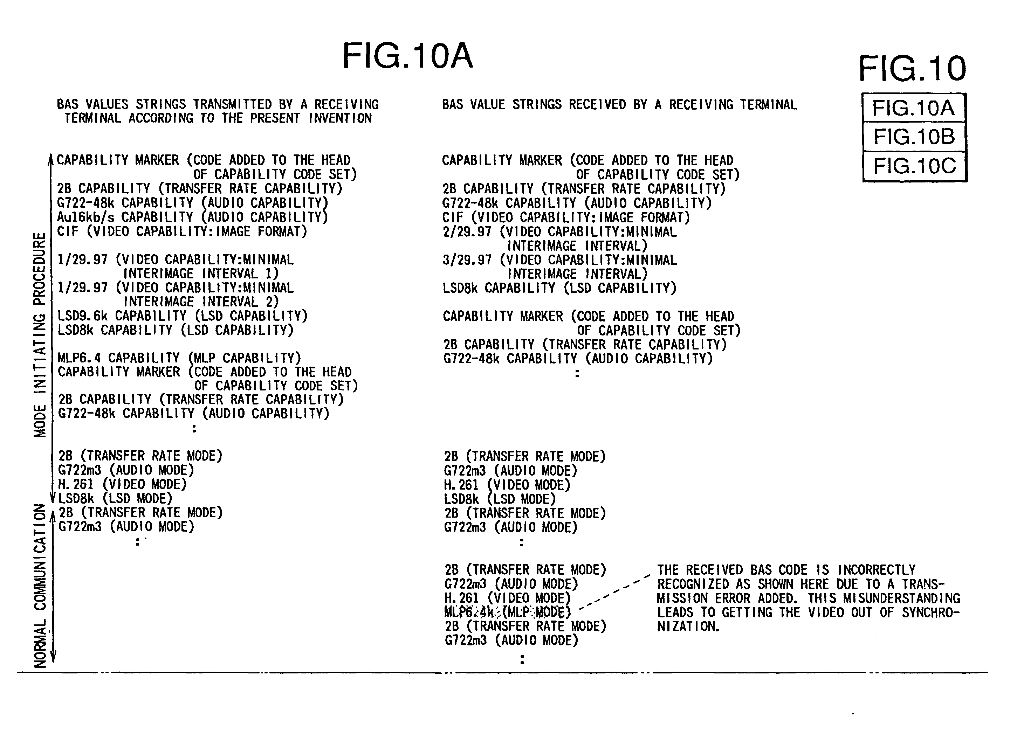

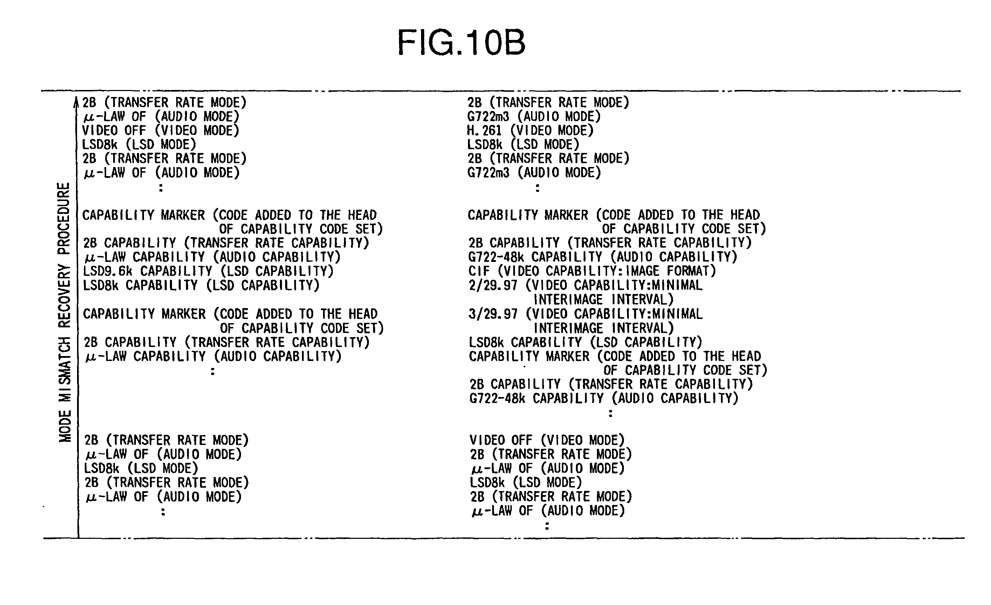

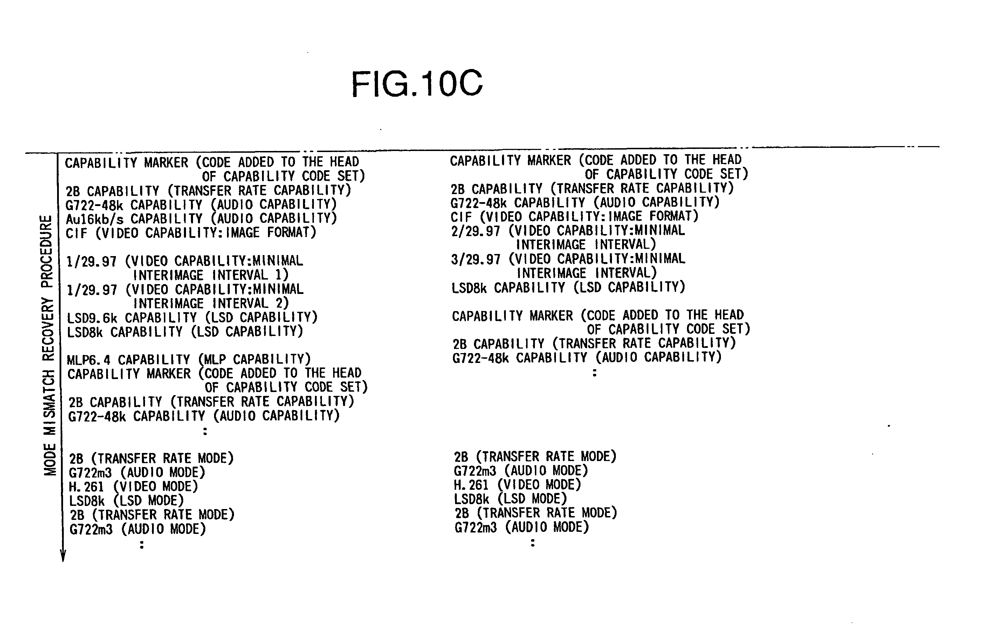

Fig. 10 shows an example of a string of BAS codes to be transmitted when executing a mode-mismatch recovering procedure (shown in Figs. 10B and 10C) according to the present invention in the case that the FEC synchronization of video signals is lost and the synchronization of LSD data is kept as established. The shown example will be explained below in comparison with the string of BAS codes to be transmitted when executing the conventional mode-mismatch recovering procedure (shown in Figs. 7B and 7C). In both examples, one terminal has a BAS code set of transmission capability {2B Capability, G.722-48k, Capability Au16kb/s, CIF, 1/29.97, 1/29.97, Capability LSD9.6k, Capability LSD8k, Capability MLP6.4k} and the other terminal has a BAS code set of transmission capability {Capability 2B, G.722-48k, CIF, 2/29.97, 3/29.97, Capability LSD8k, Capability MLP6.4k}. As the result of execution of a mode initializing procedure for determining transmission mode of respective terminals, a BAS command set specifying a transmission mode of the receving terminal is determined as {2B, G.722m3, H.261, LSD8kb/s} and a BAS command set specifying a transmission mode of a sending terminal becomes the same as that of the receiving terminal. At this time, a BAS code of MLP6.4kb/s is incorrectly recognized resulting in that the video FEC synchronization is lost and can not be restored but the H.221-frame alignment and the data synchronization are kept as established.

In this instance, the prior art system transmits a BAS command set {1B, µ-law OF, video OFF, LSD OFF} and then a capability-indicating BAS code set {Capability 1B, Capability µ-law}. The receiving terminal, which received the capability-indicating BAS code set during the communication with the sending terminal, transmits a BAS code set indicating own capability to the sending terminal and then carries-out again negotiation to determine a transmission mode like at the communication starting stage. The receiving terminal presents that it is capable of receiving only audio signal of µ-law and incapable of receiving video and data LSD and MLD. The sending terminal stops transmission of video and data LSD and sends only audio signal of µ-law OF to restore the initial call setting-up mode. The receiving terminal stops separation of video, data LSD and erroneously recognized data MLP. Like the mode initializing procedure at the beginning of data communication, the both terminals send and receive the capability-indicating BAS code set, determines the communication mode and sends and receives the BAS command set. The mismatched mode condition is corrected and accurate data transmission is achieved.

Under the condition that the video FEC synchronization is lost and can not be restored but the H.221 frame alignment and the data synchronization are kept as established over the LSD transmission line, the communication procedure control system according to the present invention first transmits the BAS command set {2B, µ-law OF, Video OFF, LSD8k} and then the capability-indicating BAS code set {2B Capability, µ-Law Capability, LSD8k Capability} to initialize video, MLP data and asynchronous audio modes.

In this instance, the receiving terminal informed that it can receive audio signals of µ-law and data of LSD8k but can not receive video signals and MLP data, and the sending terminal, therefore, stops the transmission of video signals and continues transmission of LSD8k data and selects the speech communication "µ-Law OF". The receiving terminal stops separation of video signals and erroneously recognized MLP data. Like the mode initializing procedure at the beginning of data communication (see Fig. 10A), the both terminals send and receive the capability-indicating BAS code set, determines the communication mode and sends and receives the BAS command set. The mismatched mode condition is corrected and correct transmission of various kinds of information is resumed. Namely, according to the present invention, the recovery from mismatched mode can be achieved, keeping the LSD transmission line in its synchronized condition.

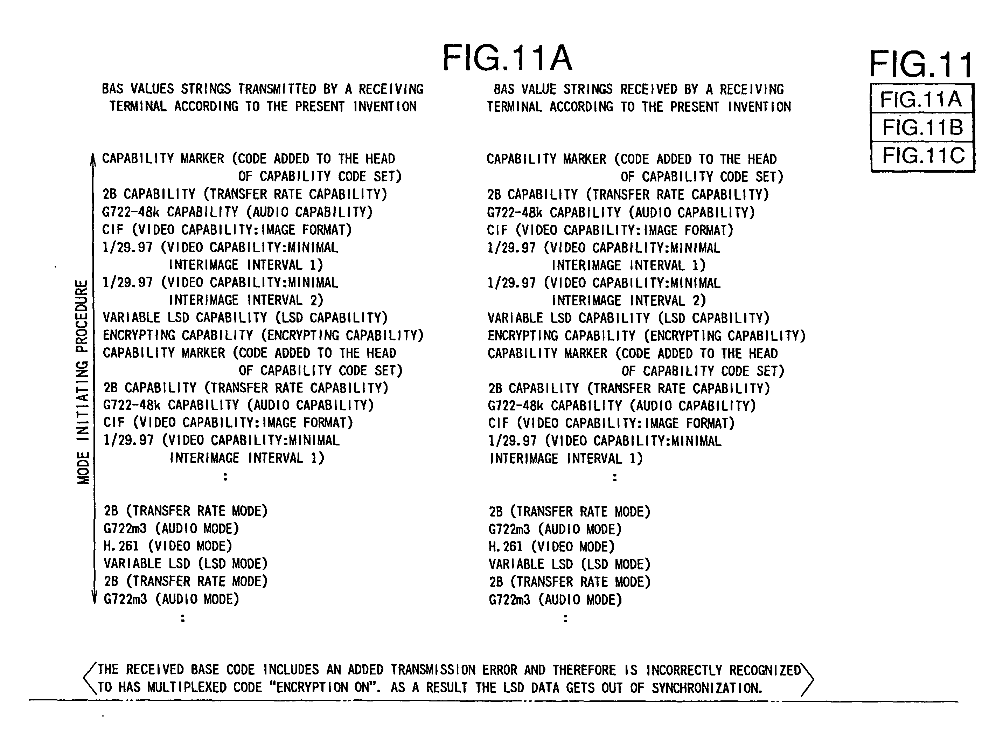

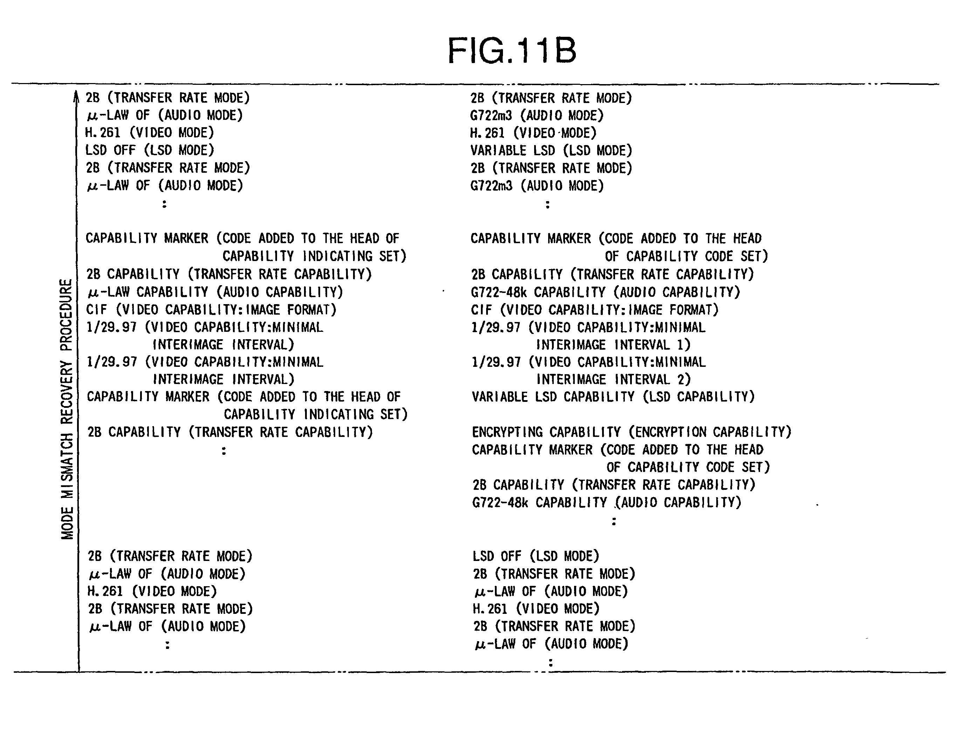

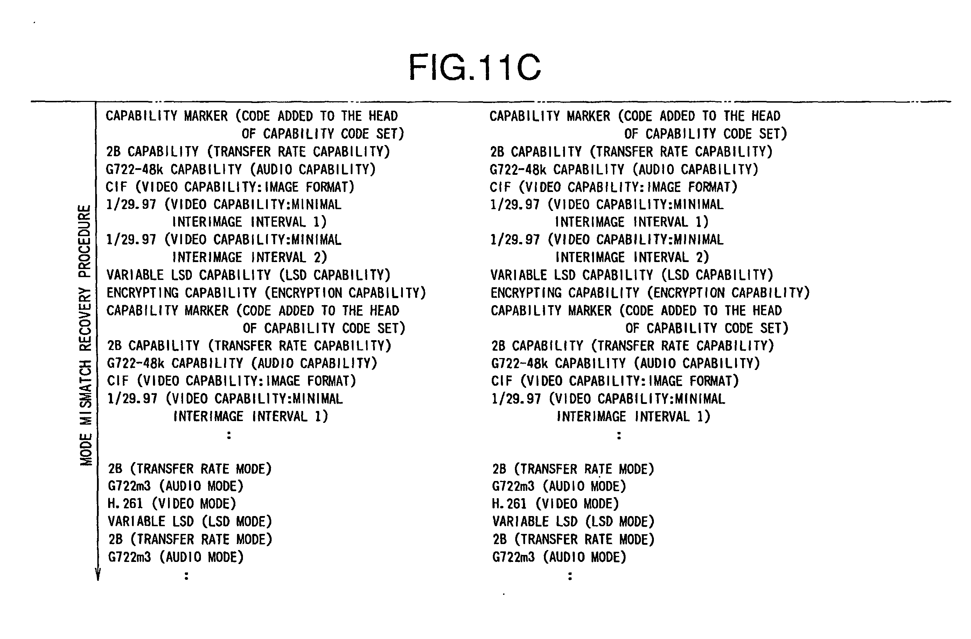

Fig. 11 shows an example of mode-mismatch recovering means according to the present invention, which operates, by way of example, under the condition that synchronization of FEC video signals is maintained but synchronization of LSD data is lost. In this instance, a receiving terminal and a sending terminal are assumed to have the same transmission capability {2B capability, G.722-48k, CIF, 1/29.97, 1/29.97, Variable LSD capability, Encrypting capability}. As the result of a mode initializing procedure for determining transmission mode of both terminals, both terminals have the same BAS codes {2B, G.722m3, H.261, Variable LSD}. At this time, a BAS code of encryption ON is incorrectly recognized resulting in that the LSD data synchronization is lost and can not be restored but the H.221-frame alignment and the FEC video synchronization are maintained as established.

According to the present invention, the receiving terminal in this instance first transmits the BAS command set {2B, µ-law OF, H.261, LSD OFF} and then the capability-indicating BAS code set {2B Capability, µ-Law Capability, CIF, 1/29.97, 1/29.97}. The receiving terminal informed the sending terminal that it can receive audio signals of µ-law and video signals but can not receive LSD data and encrypted data. The sending terminal, therefore, stops transmission of LSD data and continues transmission of video signals and selects the speech communication "µ-Law OF". The receiving terminal stops separation of LSD data and incorrectly recognized encrypted data. Like the mode initializing procedure at the beginning of data communication, the both terminals send and receive the capability-indicating BAS set, determine the communication mode and send and receive the BAS command set. The mismatched mode condition is corrected and accurate transmission of various kinds of information is restored. Namely, according to the present invention, the recovery from the mismatched mode can be achieved, keeping the video transmission line in its synchronized condition.

As is apparent from the foregoing, the present invention offers the following advantages:

Under the condition that, in multiplex transmission of H.221 frames, any one of different kinds of received and separated signals (information) is pulled out of synchronization and can not be restored in synchronized condition but H.221 frames are kept as synchronized in the multiplexed transmission line of H.221 frames, the mismatched mode can be removed without interrupting transmission of signals being in synchronized condition. The communication procedure control system according to the present invention is also applicable to transmission of various kinds of data such as video-data and synchronous data.

## Claims

1. A communication procedure control system for multiplex transmission of a plurality of different forms of data in frames according to the ITU-T Recommendation H.221, comprising data synchronization monitoring means (11, 12) for monitoring the different forms of received data, separated after having been received in the form of a frame H.221 over a multiplex transmission line, frame synchronization monitoring means (13) for monitoring frame synchronization of the received frames, communication procedure executing means (15) for executing a mode-mismatch recovering procedure for matching transmission and reception communication modes in the event that loss of synchronization of data transmission occurs and continues over a specified time, **characterized in that** information synchronization control means (14) is provided for performing overall control of the synchronized conditions of the received data and for issuing, in the event of loss of synchronization in said monitored information over the specified time, a request for execution by said communication procedure execution means of a mode-mismatch recovering procedure while maintaining transmission of the information which has not lost synchronization.

2. A communication procedure control system according to claim 1, wherein the data synchronization monitoring means (11) is arranged to monitor the synchronization of video data in a video-data decoding portion and the synchronization of synchronous data in a data receiving portion.

3. A communication procedure control system according to claim 2, wherein said communication-procedure executing means (15) is arranged to perform a communication procedure to re-establish how video data transmission is to be performed while maintaining transmission of the synchronous data whenever the synchronization monitoring means (11, 12) detects that the received video data has lost synchronization but the received synchronous data is still in synchronization.

4. A communication procedure control system according to claim 2, wherein said communication-procedure executing means (15) is arranged to perform again the communication procedure to re-establish how synchronous data transmission is to be performed while maintaining transmission of video data whenever the synchronization monitoring means (11, 12) detects that the received synchronous data has lost synchronization but the received video data is still in synchronization.

5. A communication procedure control system according to claim 1, wherein the data monitored by said data synchronization monitoring means includes synchronous data in a data receiving portion.

6. A communication procedure control system according to claim 5, wherein said information synchronization control means is operable to cause the communication procedure executing means to execute the mode-mismatch recovering procedure while maintaining synchronization of data other than the synchronous data when synchronization of said synchronous data has been lost and synchronization of said other data has not been lost.

7. A communication procedure control system according to claim 5, wherein said information synchronization control means is operable to cause the communication procedure executing means to execute the mode-mismatch recovering procedure while maintaining synchronization of the synchronous data when synchronization of data other than the synchronous data has been lost and synchronization of said synchronous data has not been lost.

## Patentansprüche

1. Kommunikationsverfahrenregel- bzw. -steuersystem für Multiplexübertragung einer Vielzahl von verschiedenen Formen von Daten in Rahmen gemäß der ITU-T-Empfehlung H.221, umfassend eine Datensynchronisationsüberwachungseinrichtung (11, 12) zum Überwachen der verschiedenen Formen von empfangenen Daten, welche getrennt wurden, nachdem sie empfangen wurden in der Form eines Rahmens H.221 über eine Multiplexübertragungsleitung, eine Rahmensynchronisationsüberwachungseinrichtung (13) zum Überwachen der Rahmensynchronisation der empfangenen Rahmen, eine Kommunikationsverfahrenausführungseinrichtung (15) zum Ausführen eines Modennichtübereinstimmung-Wiederherstellungsverfahrens zum Abstimmen bzw. in Übereinstimmung bringen von Übermittlungs- und Empfangskommunikationsmoden in dem Fall, dass ein Verlust der Synchronisation der Datenübertragung auftritt und über eine vorbestimmte Zeit weiterdauert, **dadurch gekennzeichnet, dass** eine Informationssynchronisationregel- bzw. -steuereinrichtung (14) vorgesehen ist zum Durchführen einer Gesamtregelung bzw. -steuerung der synchronisierten Zustände der empfangenen Daten und zum Ausgeben, in dem Fall des Verlustes der Synchronisation in der überwachten Information über die vorbestimmte Zeit, einer Anfrage zur Durchführung durch die Kommunikationsverfahrensausführeinrichtung eines Modennichtübereinstimmung-Wiederherstellungsverfahrens, während die Übertragung der Information, welche die Synchronisation nicht verloren hat, beibehalten wird.

2. Kommunikationsverfahrensteuersystem gemäß Anspruch 1, wobei die Datensynchronisationsüberwachungseinrichtung (11) ausgelegt ist, um die Synchronisation von Videodaten in einem Videodatendecodierabschnitt und die Synchronisation von synchronen Daten in einem Datenempfangsabschnitt zu überwachen.

3. Kommunikationsverfahrensteuersystem gemäß Anspruch 2, wobei die Kommunikationsverfahrenausführeinrichtung (15) ausgelegt ist, ein Kommunikationsverfahren durchzuführen, um wiederherzustellen, wie Videodatenübertragung durchgeführt werden soll, während die Übertragung der synchronen Daten beibehalten wird, wann immer die Synchronisationsüberwachungseinrichtung (11, 12) erfasst, dass die empfangenen Videodaten Synchronisation verloren haben, aber die empfangenen synchronen Daten immer noch in Synchronisation sind.

4. Kommunikationsverfahrensteuersystem gemäß Anspruch 2, wobei die Kommunikationsverfahrenausführeinrichtung (15) ausgelegt ist, um das Kommunikationsverfahren wieder durchzuführen, um wiederherzustellen, wie synchrone Datenübertragung durchgeführt werden soll, während die Übertragung von Videodaten beibehalten wird, wann immer die Synchronisationsüberwachungseinrichtung (11, 12) erfasst, dass die empfangenen synchronen Daten Synchronisation verloren haben, aber die empfangenen Videodaten immer noch in Synchronisation sind.

5. Kommunikationsverfahrensteuersystem gemäß Anspruch 1, wobei die durch die Datensynchronisationsüberwachungseinrichtung überwachten Daten synchrone Daten in einem Datenempfangsabschnitt beinhalten.

6. Kommunikationsverfahrensteuersystem gemäß Anspruch 5, wobei die Informationssynchronisationssteuereinrichtung betätigbar ist, um zu bewirken, dass die Kommunikationsverfahrenausführeinrichtung das Modennichtübereinstimmung-Wiederherstellungsverfahren durchführt, während sie Synchronisation von Daten verschieden von den synchronen Daten beibehält, wenn Synchronisation der synchronen Daten verloren wurde und Synchronisation von den anderen Daten nicht verloren wurde.

7. Kommunikationsverfahrensteuersystem gemäß Anspruch 5, wobei die Informationssynchronisationssteuereinrichtung betätigbar ist, um zu bewirken, dass die Kommunikationsverfahrenausführeinrichtung das Modennichtübereinstimmung-Wiederherstellungsverfahren durchführt, während sie Synchronisation der synchronen Daten beibehält, wenn Synchronisation von Daten verschieden von den synchronen Daten verloren wurde und Synchronisation von den synchronen Daten nicht verloren wurde.

## Revendications

1. Système de contrôle de procédure de communication destiné à une émission en multiplex d'une pluralité de formes différentes de données dans des trames conformes à la recommandation H.221 ITU-T, comprenant un moyen de surveillance de synchronisation de données (11, 12) destiné à surveiller les différentes formes de données reçues, séparées après avoir été reçues sous la forme d'une trame H.221 sur une ligne d'émission en multiplex, un moyen de surveillance de synchronisation de trame (13) destiné à surveiller la synchronisation de trame des trames reçues, un moyen d'exécution de procédure de communication (15) destiné à exécuter une procédure de récupération de discordance de modes permettant de corréler des modes de communication d'émission et de réception dans le cas où une perte de synchronisation de l'émission de données se produit et se poursuit pendant une durée définie, **caractérisé en ce que** le moyen de contrôle de synchronisation d'informations (14) est conçu pour procéder à un contrôle global des conditions synchronisées des données reçues et pour émettre, dans le cas d'une perte de synchronisation dans lesdites informations surveillées pendant la durée définie, une demande d'exécution par ledit moyen d'exécution de procédure de communication d'une procédure de récupération de discordance de modes tout en maintenant l'émission des informations qui n'ont pas subi de perte de synchronisation.

2. Système de contrôle de procédure de communication selon la revendication 1, dans lequel le moyen de surveillance de synchronisation de données (11) est conçu pour surveiller la synchronisation de données vidéo dans une partie de décodage de données vidéo et la synchronisation de données synchrones dans une partie de réception de données.

3. Système de contrôle de procédure de communication selon la revendication 2, dans lequel ledit moyen d'exécution de procédure de communication (15) est conçu pour mettre en oeuvre une procédure de communication afin d'établir de nouveau les modalités de mise en oeuvre de l'émission de données vidéo tout en maintenant l'émission de données synchrones lorsque le moyen de surveillance de synchronisation (11, 12) détecte que les données vidéo reçues ont subi une perte de synchronisation, mais que les données synchrones reçues sont encore synchronisées.

4. Système de contrôle de procédure de communication selon la revendication 2, dans lequel ledit moyen d'exécution de procédure de communication (15) est conçu pour mettre de nouveau en oeuvre la procédure de communication afin d'établir de nouveau les modalités de mise en oeuvre de l'émission de données synchrones tout en maintenant l'émission de données vidéo lorsque le moyen de surveillance de synchronisation (11, 12) détecte que les données vidéo reçues ont subi une perte de synchronisation, mais que les données synchrones reçues sont encore synchronisées.

5. Système de contrôle de procédure de communication selon la revendication 1, dans lequel les données surveillées par ledit moyen de surveillance de synchronisation de données incluent des données appartenant à une partie de réception de données.

6. Système de contrôle de procédure de communication selon la revendication 5, dans lequel ledit moyen de contrôle de synchronisation d'informations est utilisable pour faire en sorte que le moyen d'exécution de procédure de communication exécute la procédure de récupération de discordance de modes tout en maintenant la synchronisation de données autres que les données synchrones lorsque la synchronisation desdites données synchrones a été perdue et que la synchronisation desdites autres données n'a pas été perdue.

7. Système de contrôle de procédure de communication selon la revendication 5, dans lequel ledit moyen de contrôle de synchronisation d'informations est utilisable pour faire en sorte que le moyen d'exécution de procédure de communication exécute la procédure de récupération de discordance de modes tout en maintenant la synchronisation des données synchrones lorsque la synchronisation des données autres que les données synchrones a été perdue et que la synchronisation desdites données synchrones n'a pas été perdue.
